(19) Europäisches Patentamt
European Patent Office
Office européen des brevets

(11) Veröffentlichungsnummer: **0 504 683 A1**

# (12) EUROPÄISCHE PATENTANMELDUNG

(21) Anmeldenummer: **92103890.7**

(22) Anmeldetag: **06.03.92**

(51) Int. Cl.$^5$: **C04B 41/45**, C23D 5/04

Priorität: 190391 IT MI91000736.

(30) Priorität: **19.03.91 IT 910736**

(43) Veröffentlichungstag der Anmeldung: **23.09.92 Patentblatt 92/39**

(84) Benannte Vertragsstaaten: **DE ES FR GB IT NL PT**

(71) Anmelder: **Bayer S.p.A.**
**Viale Certosa 126**
**I-20156 Milano(IT)**

(72) Erfinder: **Zybell, Paul, Dr.**
**Via Monte Gleno, 7**
**I-24044 Dalmine(IT)**
Erfinder: **Broggi, Giovanni**
**Via Trenno 144**
**I-20151 Milano(IT)**

(74) Vertreter: **Steiling, Lothar, Dr. et al**
**c/o Bayer AG Konzernverwaltung RP Patente Konzern**
**W-5090 Leverkusen 1 Bayerwerk(DE)**

## (54) Keramische Mikrogranulate für den elektrostatischen Auftrag und Verfahren zu deren Herstellung.

(57) Die Erfindung betrifft keramische Mikrogranulate oder Gemische verschiedener keramischer Mikrogranulate mit unterschiedlichen Oberflächenspannungen für den elektrostatischen Auftrag auf keramische Substrate mit einer mit elektrisch isolierenden Substanzen behandelten Oberfläche.

EP 0 504 683 A1

Die vorliegende Erfindung betrifft keramische Mikrogranulate für den elektrostatischen Auftrag auf keramische Substrate und ein Verfahren zu deren Herstellung.

Es ist bekannt, daß sich Emailpulver elektrisch aufladen und im elektrischen Feld mit einer Potentialdifferenz von ca. 60.000 bis 100.000 Volt auf metallische Unterlagen aufbringen lassen. Zu diesem Zweck werden die Kornoberflächen der Emailpulver mit isolierenden Substanzen überzogen, die in einer Menge von 0,1 bis 2,0 Gew.-% den Emailfritten vor oder während der Trockenvermahlung zugesetzt werden, um einen spezifischen elektrischen Widerstand von $10^{12}$ bis $10^{16}$ Ohm.cm zu erzielen. Als isolierende Substanzen werden Silanöle, Isocyanate, Siliciumstickstoffverbindungen, Carbodiimide, Chlorsilane und Organopolysiloxane eingesetzt (DE-OS 2 015 072).

Der Auftrag von Mikrogranulaten auf keramische Substrate erfolgt normalerweise im Naßverfahren, indem man die Granulate auf ein naß engobiertes Substrat oder auf eine mit leimartiger Lösung benetzte Keramikoberfläche durch Sieben, Rieseln oder Schütten aufbringt. Das fixierte Granulat soll beim nachfolgenden Brand glatt fließen.

Beim Trockenauftragsverfahren wird das Mikrogranulat auf ein vorgeheiztes Substrat durch Sieben, Riesein oder Schütten aufgebracht, so daß es zunächst durch ein lokales Anschmelzen haftet und dann bei der folgenden Wärmebehandlung glatt fließt. Diese Arbeitstechnik kann im kontinuierlichen Ofen praktiziert werden, wobei jedoch die Auftragsstation zwischen zwei Heizzonen positioniert werden muß. Dadurch entsteht ein erheblicher Wärmeverlust, und der Auftrag als solcher wird durch den zusätzlichen Effekt des Wärmeauftriebs und die dadurch erhöhte Staubentwicklung erschwert. Bei beiden Arbeitstechniken ist eine Absaugung, um die Staubbelastung zu limitieren, und eine Rückführung der Mikrogranulate, die bei der Beschichtung der vorgesehenen Oberflächen das Objekt verfehlen, vorzusehen.

Keramische Mikrogranulate lassen sich auch elektrostatisch auf keramische Oberflächen auftragen, wobei jedoch die Haftung derart gering ist, daß eine Hantierung der Teile vor dem Sinter-Brennprozeß praktisch nicht möglich ist, da das Granulat von den Teilen abfällt.

Aufgabe war es daher, keramische Mikrogranulate zur Verfügung zu stellen, die elektrostatisch auf keramische Substrate aufgebracht werden können und eine gute Haftung auf der keramischen Oberfläche aufweisen.

Diese Aufgabe konnte mit den erfindungsgemäßen keramischen Mikrogranulaten gelöst werden.

Gegenstand der Erfindung sind keramische Mikrogranulate für den elektrostatischen Auftrag auf keramische Substrate mit einer mit elektrisch isolierenden Substanzen behandelten Oberfläche, die dadurch gekennzeichnet ist, daß die elektrisch isolierenden Substanzen halogenfreie Polysiloxane oder Gemische davon sind und mit ihren reaktiven Gruppen an den Kornoberflächen der Keramik-Granulate reagieren und in einer Menge von 0,05 - 0,3 Gew.-%, bezogen auf das keramische Mikrogranulat, vorliegen und daß das Granulat, welches bei einer Temperatur von 70 bis 300 °C über 60 bis 120 Minuten thermobehandelt wird, eine Korngröße von 1 bis 300 mikron, einen spezifischen elektrischen Widerstand von $10^{14}$ bis $10^{16}$ Ohm.cm und einen kubischen Wärmeausdehnungskoeffizienten von (130-230).$10^{-7}$ $K^{-1}$ aufweisen.

Bevorzugt sind Mikrogranulate, die mit Polymethylhydrogensiloxanen der Formel

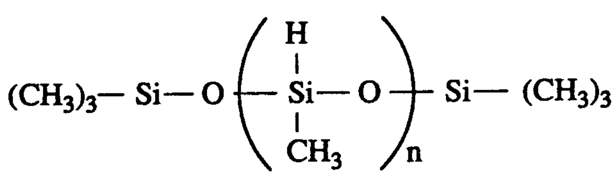

mit n = 5 bis 50 oder Gemischen davon behandelt werden oder mit Polydimethylsiloxanen der Formel

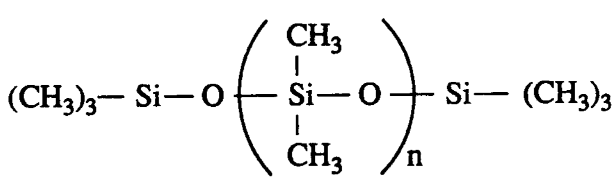

mit n = 20 bis 90 oder Gemischen davon bzw. Gemischen von Polymethylhydrogensiloxanenund Polydimethylsiloxanen.

Ein weiterer Gegenstand der Erfindung ist ein Verfahren zur Herstellung der erfindungsgemäßen keramischen Mikrogranulate für den elektrostatischen Auftrag, welches dadurch gekennzeichnet ist, daß die keramischen Ausgangsfritten mit einem kubischen Wärmeausdehnungskoeffizienten von $130\text{-}230.10^{-7}\ K^{-1}$ auf Walzen bis zu einer maximalen Korngröße von 300 mikron gebrochen und anschließend mit 0,05 bis 0,3 Gew.-%, bezogen auf die Fritte, halogenfreien mit ihren reaktiven Gruppen an den Kornoberflächen der Frittenteilchen reagierenden Polysiloxanen oder Gemischen davon behandelt werden bei einer Temperatur von 100 bis 300 ° C über 60 bis 120 Minuten, um einen spezifischen elektrischen Widerstand von $10^{14}$ bis $10^{16}$ Ohm.cm zu erzielen.

In einer bevorzugten Verfahrensweise werden die keramischen Mikrogranulate mit Polymethylhydrogensiloxanen der Formel

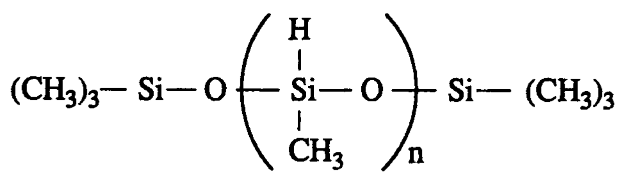

mit n = 5 bis 50 oder Gemischen davon behandelt oder mit Polydimethylsiloxanen der Formel

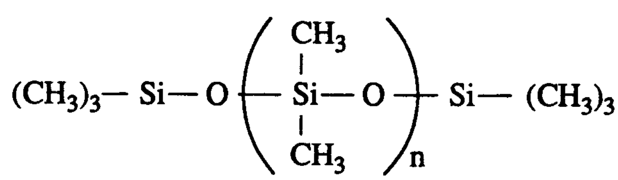

mit n = 20 bis 90 oder Gemischen davon bzw. Gemischen von Polymethylhydrogensiloxanenund Polydimethylsiloxanen.

Die erfindungsgemäßen keramischen Mikrogranulate werden für den elektrostatischen Auftrag auf keramische Substrate verwendet, wobei die Granulate vor dem elektrostatischen Auftrag, vorzugsweise über ein Fließbett fluidisiert und zusätzlich mechanisch gemischt werden, um die Homogenität des Materials zu gewährleisten.

Die erfindungsgemäße elektrostatische Trockenbeschichtung hat gegenüber anderen Techniken erhebliche Vorteile:

So entfallen die Naßbeschichtung der keramischen Oberflächen mit Engoben bzw. leimartigen Lösungen, um ein Haften des Mikrogranulats zu ermöglichen, und der damit verbundene Trockenprozeß, was wiederum eine Energie- und Raumersparnis bewirkt.

Bei der Trockenbeschichtung auf heißen Substraten entfallen die Unterbrechung der Wärmebehandlung, der damit verbundene Wärmeverlust und die Staubentwicklung aufgrund des Wärmeauftriebs.

In beiden Fällen wird bei dem erfindungsgemäßen elektrostatischen Auftragsverfahren der Arbeitsablauf wesentlich vereinfacht.

Darüber hinaus bietet sich eine maßgebliche Materialeinsparung, da die nach dem erfindungsgemäßen Verfahren behandelten Mikrogranulate in elektrostatischen Auftragskabinen mit einem Wirkungsgrad von >99% abgeschieden werden können.

Beim elektrostatischen Auftrag bleiben die Mikrogranulate außerdem in einem geschlossenen System und die aus der Kabine austretende Luft wird über Filter gereinigt. Ein derartiges geschlossenes System ist weder beim Naßauftrag noch beim Trockenverfahren mittels Sieben, Rieseln oder Schütten von Keramik-Granulaten oder -Pulvern gegeben.

Da die Keramikfritten oft bleihaltig sind, erfordern die konventionellen Auftragssysteme erhöhte Sicherheitsvorkehrungen.

Das elektrostatische Trocken-Auftragssystem von Mikrogranulaten bietet die Voraussetzung für eine Automatisierung des gesamten Verfahrensablaufs von der Rohmaterialpresse bis zur gebrannten Fliese, eine Kompaktierung der Anlage durch die Eliminierung von Naßauftragslinien, Trocknern und Staplern und somit eine erhebliche Einsparung von Personal.

Die Erfindung soll anhand nachfolgender Beispiele näher erläutert werden, ohne daß hierin eine

Einschränkung zu sehen ist.

Beispiel 1

Je 100 kg von verschiedenfarbigen keramischen Fritten, mit einem kubischen Wärmeausdehnungskoeffizienten von 130 bis 230 x $10^{-7}$ $K^{-1}$ werden mittels Stahlwalzen bis zu einer maximalen Korngröße von 300 mikron gebrochen und anschließend über ein Sieb mit 425 Maschen/$cm^2$ geführt. Die auf diese Weise erzielten Mikro-Granalien werden untereinander gemischt, um einen Granit-Effekt zu bewirken.

Die Korngrößenverteilung der Mikro-Granalien resultiert wie folgt:

| | |
|---|---|
| 300 - 200 mikron | 35 % Gewichtsprozent |
| 200 - 160 " | 20 % " |
| 160 - 100 " | 20 % " |
| 100 - 50 " | 15 % " |
| 50 - 0 " | 10 % " |

Die Mikrogranulate werden zwecks Inkapsulation mit 0,12 Gew.-% eines Gemisches von Polymethylhydrogensiloxanen der Formel

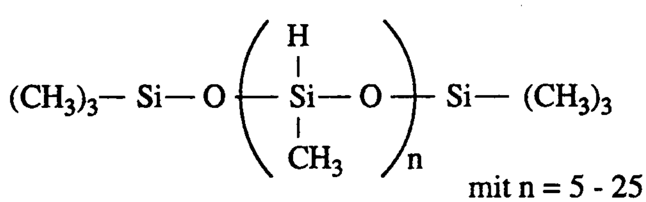

mit n = 5 - 25

in einem beheizbaren Behälter über 60 Minuten auf ca. 150 °C erwärmt, wobei die Mikrogranulate durch Drehen des Behälters in Bewegung gehalten werden. Anstelle eines beheizbaren Behälters kann für die Wärmebehandlung ein Drehrohrofen verwendet werden, der die Möglichkeit einer kontinuierlichen Arbeitsweise bietet.

Nach der Wärmebehandlung liegt der spezifische Widerstand des Mikrogranulats bei $10^{16}$ Ohm.cm und läßt sich elektrostatisch bei 80 kV, 0,3 mA und einem Zerstäuberdruck von 3,5 bar auf einer horizontalen keramischen Oberfläche gleichmäßig aufbringen. Die Haftung der Mikrogranulate ist so gut, daß der mechanische Transport zum Ofen, die automatische Gruppierung der Fliesen vor dem Brand und der Transport in die Brennkammer ohne Schwierigkeit beherrscht werden. Die Oberflächen der aufgeschmolzenen Mikrogranulate zeichnen sich durch eine besondere Härte und Abriebfestigkeit aus. Sie werden vorwiegend für die Herstellung von keramischen Bodenfliesen verwandt.

Beispiel 2

Die Behandlung der Mikrogranulate erfolgt analog Beispiel 1 mit dem Unterschied, daß die Wärmebehandlung unterbleibt. In diesem Falle resultiert ein spezifischer Widerstand von $10^9$ Ohm.cm und die Mikrogranulate zeigen nach dem Auftrag eine unzureichende Haftung auf dem keramischen Substrat.

Beispiel 3

Die Behandlung der Mikrogranulate erfolgt analog Beispiel 1 mit dem Unterschied, daß Mikrogranulate bis zu 500 mikron eingesetzt werden. In diesem Falle ergeben sich Auftragsschwierigkeiten, da ein Teil der groben Körner beim elektrostatischen Auftrag von der keramischen Oberfläche zurückprallen. Die Haftung nach dem Auftrag ist kritisch, da ein Teil des groben Materialanteils beim Wenden der Fliesen abfällt.

Beispiel 4

Die Behandlung der Mikrogranulate erfolgt analog dem Beispiel 1 mit der Variation, daß Mikrogranulate mit unterschiedlichen Farben und Oberflächenspannungen eingesetzt werden, um spezifische Dekoreffekte zu erzielen, bedingt durch Kontraktions-, Zirkulations- und Umschichtvorgänge. Diese Oberflächenreaktionen sind bekannt als Dynaktivität, die in der Literatur beschrieben wurde. (Siehe H. Jebsen-Marwedel, Mitteilungen des VDEFa 1959, Band 7, Seite 1-8; G. Wagner, Mitteilungen des VDEFa 1977, Band 25, Seite 100-105.)

Die Haftung der Mikrogranulate ist gut. Außerdem war es möglich, optische Effekte zu erzielen, ohne die Oberflächenglätte negativ zu beeinflussen.

## Patentansprüche

1. Keramische Mikrogranulate oder Gemische verschiedener keramischer Mikrogranulate mit unterschiedlichen Oberflächenspannungen für den elektrostatischen Auftrag auf keramische Substrate mit einer mit elektrisch isolierenden Substanzen behandelten Oberfläche, dadurch gekennzeichnet, daß die elektrisch isolierenden Substanzen halogenfreie Polysiloxane oder Gemische davon sind und mit ihren reaktiven Gruppen an den Kornoberflächen der keramischen Mikrogranulate reagieren und in einer Menge von 0,05 bis 0,3 Gew.-%, bezogen auf die Mikrogranulate, vorliegen und daß die Mikrogranulate über 60 bis 120 Minuten bei einer Temperatur von 100 bis 300 °C thermisch behandelt werden, eine Mahlfeinheit von 1 bis 300 mikron, einen spezifischen elektrischen Widerstand von $10^{14}$ bis $10^{16}$ Ohm.cm und einen kubischen Wärmeausdehnungskoeffizienten von 130 bis 230 x $10^{-7}$ $K^{-1}$ aufweisen.

2. Mikrogranulate nach Anspruch 1, dadurch gekennzeichnet, daß als Polysiloxane Polymethylhydrogensiloxane der Formel

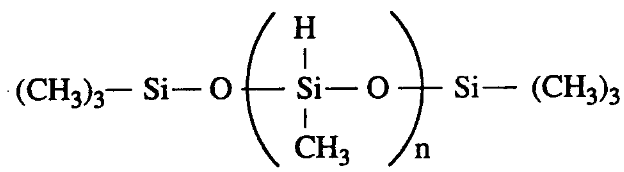

mit n = 5 bis 50 oder Gemischen davon eingesetzt werden oder mit Polydimethylsiloxanen der Formel

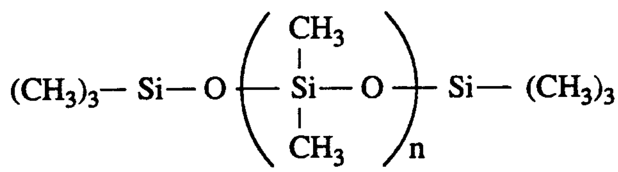

mit n = 20 bis 90 oder Gemischen davon bzw. Gemischen von Polymethylhydrogensiloxanenund Polydimethylsiloxanen.

3. Verfahren zur Herstellung von keramischen Mikrogranulaten nach Anspruch 1 oder 2 mit einer mit elektrisch isolierenden Substanzen behandelten Oberfläche, dadurch gekennzeichnet, daß die Mikrogranulate entsprechend einer Korngröße von 1 bis 300 mikron während der Thermobehandlung zwischen 100 bis 300 °C über 60 bis 120 Minuten mit 0,05 bis 0,3 Gew.-% halogenfreien mit ihren reaktiven Gruppen an den Kornoberflächen der Fritteilchen reagierenden Polysiloxanen oder Gemischen davon, bezogen auf die Mikrogranulate, behandelt werden, einen spezifischen elektrischen Widerstand von $10^{-14}$ bis $10^{16}$ Ohm.cm und einen kubischen Wärmeausdehnungskoeffizienten von (130 bis 230)-.$10^{-7}$ $K^{-1}$ aufweisen.

4. Verfahren zur Herstellung von Mikrogranulaten gemäß Anspruch 3, dadurch gekennzeichnet, daß die den Pulvern entsprechenden Fritten mit Polymethylhydrogensiloxanen der Formel

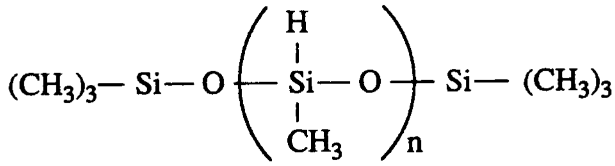

mit n = 5 bis 50 oder Gemischen davon behandelt werden oder mit Polydimethylsiloxanen der Formel

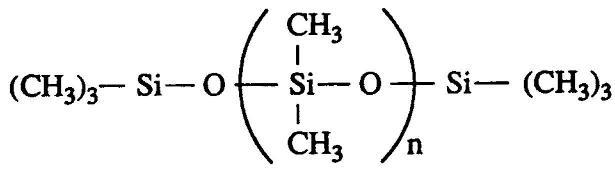

mit n = 20 bis 90 oder Gemischen davon bzw. Gemischen von Polymethylhydrogensiloxanenund Polydimethylsiloxanen.

5. Verwendung der Mikrogranulate nach Anspruch 1 oder 2 für den elektrostatischen Auftrag auf keramische Substrate.

6. Verwendung der Mikrogranulate nach Anspruch 5 beim elektrostatischen Auftrag zur Beschichtung von keramischen Substraten, wobei die Mikrogranulate fluidisiert und zusätzlich homogenisiert sind.

Europäisches Patentamt

# EUROPÄISCHER RECHERCHENBERICHT

Nummer der Anmeldung

EP 92 10 3890

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 382 003 (BAYER ITALIA S.P.A.)<br>* Zusammenfassung; Ansprüche 1-5 *<br>* Seite 2, Zeile 20 - Seite 3, Zeile 30 *<br>* Seite 4, Zeile 1 - Zeile 27 *<br>--- | 1-6 | C04B41/45<br>C23D5/04 |
| P,X | EP-A-0 442 109 (BAYER ITALIA S.P.A.)<br>* Ansprüche 1-2; Beispiele 1-2 *<br>--- | 1-6 | |
| X | DE-A-3 909 656 (REIMBOLD & STRICK GMBH & CO)<br>* Zusammenfassung; Ansprüche 1-6 *<br>* Seite 2, Zeile 9 - Zeile 60 *<br>* Seite 3, Zeile 10 - Zeile 32; Beispiel 1 *<br>--- | 3-4 | |
| X | DE-A-3 700 702 (BAYER AG)<br>* Zusammenfassung; Ansprüche 1-9 *<br>* Seite 2, Zeile 49 - Seite 3, Zeile 36 *<br>* Seite 4, Zeile 2 - Zeile 25; Tabelle 1 *<br>--- | 3-4 | |
| A | EP-A-0 196 594 (BAYER AG)<br>* Seite 3, Zeile 1 - Seite 4, Zeile 3 *<br>* Seite 6, Zeile 1 - Seite 7, Zeile 19 *<br>----- | 1-6 | |

RECHERCHIERTE SACHGEBIETE (Int. Cl.5)

C04B
C23D

Der vorliegende Recherchenbericht wurde für alle Patentansprüche erstellt

| Recherchenort | Abschlußdatum der Recherche | Prüfer |
|---|---|---|
| DEN HAAG | 01 JULI 1992 | OLSSON S.A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)